Europäisches Patentamt

European Patent Office

Office européen des brevets

(19)

(11) **EP 1 489 808 A2**

(12) # EUROPEAN PATENT APPLICATION

(43) Date of publication:
**22.12.2004 Bulletin 2004/52**

(51) Int Cl.$^7$: **H04L 27/26**

(21) Application number: **04014390.1**

(22) Date of filing: **18.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **18.06.2003 KR 2003039588**
**18.06.2003 KR 2003039589**

(71) Applicant: **Samsung Electronics Co., Ltd.**
**Suwon-si, Gyeonggi-do (KR)**

(72) Inventors:
- **Ro, Jung-Min c/o SAMSUNG ELECTRONICS CO.,LTD.**
  **Suwon-si, Gyeonggi-do (KR)**
- **Cho, Young-Kwon c/o SAMSUNG ELECTRONICS CO.,LTD.**
  **Suwon-si, Gyeonggi-do (KR)**

- **Park, Dong-Seek c/o SAMSUNG ELECTRONICS CO.,LTD.**
  **Suwon-si, Gyeonggi-do (KR)**
- **Daniel,Katz Marcos c/o SAMSUNG ELECTRONICS CO.,LTD**
  **Suwon-si, Gyeonggi-do (KR)**
- **Joo, Pan-Yuh c/o SAMSUNG ELECTRONICS CO.,LTD.**
  **Suwon-si, Gyeonggi-do (KR)**
- **Park, Seong-ILL c/o SAMSUNG ELECTRONICS CO.,LTD.**
  **Suwon-si, Gyeonggi-do (KR)**

(74) Representative: **Grünecker, Kinkeldey, Stockmair & Schwanhäusser Anwaltssozietät**
**Maximilianstrasse 58**
**80538 München (DE)**

(54) **Apparatus and method for transmitting and receiving a pilot pattern for identification of a base station in a OFDM communication system**

(57) In a radio communication system that transmits reference signals for identifying a plurality of base stations from the base station to mobile stations, base station identification patterns for identifying base stations are generated by providing a method for dividing a frequency domain in a frequency-time domain given with the frequency domain and a time domain into a plurality of sub-bands. Reference signal patterns are determined in a predetermined time domain within the time domain at each of the sub-bands. In this way, the number of base stations that can be identified is increased.

FIG.1

**EP 1 489 808 A2**

**Description**

**BACKGROUND OF THE INVENTION**

1. Field of the Invention

The present invention relates generally to a communication system utilizing an Orthogonal Frequency Division Multiplexing (OFDM) scheme, and in particular, to an apparatus and method for generating a pilot pattern for identifying a base station, and transmitting and receiving the pilot pattern.

2. Description of the Related Art

In a recently popularly Orthogonal Frequency Division Multiplexing (OFDM) scheme used for high-speed data transmission over wire/wireless channels, data is transmitted using multiple carriers. The OFDM scheme is a kind of a Multi-Carrier Modulation (MCM) scheme for parallel-converting a serial input symbol stream and modulating the parallel-converted symbols with multiple sub-carriers, or multiple sub-channels.

A brief description will now be made of operations.

In a transmitter for a communication system employing the OFDM scheme (hereinafter referred to as an "OFDM communication system"), input data is modulated with sub-carriers through a scrambler, an encoder, and an interleaver. The transmitter provides a variable data rate, and has different coding rate, interleaving size, and modulation scheme according to the data rate. Commonly, the encoder uses a coding rate of 1/2 or 3/4, and an interleaver size for preventing a burst error is determined according to the number of coded bits per OFDM symbol (NCBPS).

For the modulation scheme, one of quadrature phase shift keying (QPSK), 8-ary phase shift keying (8PSK), 16-ary quadrature amplitude modulation (16QAM), and 64QAM schemes is used according to a data rate. A predetermined number of pilot sub-carrier signals are added to a signal modulated with a predetermined number of sub-carriers by the above-stated elements, and then generated into one OFDM symbol through an inverse fast Fourier transform (IFFT) block. Frequency-domain symbols become time domain symbols after IFFT process. In the IFFT block, a guard interval for removing inter-symbol interference in a multi-path channel environment is inserted into the OFDM symbol, and the guard interval-inserted OFDM symbol is finally input to a radio frequency (RF) processor. The RF processor converts the input signal into an RF signal and transmits the RF signal over the air.

In a receiver for the OFDM communication system, a reverse process of that performed in the transmitter is performed, and a synchronization process is added thereto. In the receiver, estimating a frequency offset and a symbol offset using a training symbol previously set for a received OFDM symbol must be performed. Thereafter, a guard interval-removed data symbol is demodulated with a plurality of sub-carriers to which a plurality of pilot sub-carrier signals are added, through a fast Fourier transform (FFT) block. Further, in order to cope with any path delay on an actual radio channel, an equalizer estimates a channel condition for a received channel signal and removes signal distortion on the actual radio channel from the received channel signal. Data, which is channel-estimated through the equalizer, is converted into a bit stream, and then input to a de-interleaver. Thereafter, the de-interleaved bit stream is output as final data through a decoder and a de-scrambler for error correction.

As described above, in the OFDM communication system, a transmitter, or a base station (BS), transmits pilot sub-carrier signals to a receiver, or a mobile station (MS). The base station transmits data sub-carrier (or "data channel") signals together with the pilot sub-carrier signals. Here, the pilot sub-carrier signals are transmitted for synchronization acquisition, channel estimation, and base station identification. The pilot sub-carrier signals serve as a kind of a training sequence, and are used for performing channel estimation between a transmitter and a receiver. Further, mobile stations identify their base stations using the pilot sub-carrier signals. Points where the pilot sub-carrier signals are transmitted have been previously agreed upon between the transmitter and the receiver. As a result, the pilot sub-carrier signals serve as a type of reference signals.

A base station transmits the pilot sub-carrier signals such that the pilot sub-carrier signals can reach up to a cell boundary with relatively high transmission power, as compared with the data channel signals, while having a particular pattern, or a pilot pattern. Here, the base station transmits the pilot sub-carrier signals such that they can reach up to the cell boundary while having a particular pilot pattern because a mobile station, when it enters a cell, has no information on its current base station. In order to detect its base station, the mobile station must use the pilot sub-carrier signals. Therefore, the base station transmits the pilot sub-carrier signals in a particular pilot pattern with relatively high transmission power so that the mobile station can detect its base station.

The pilot pattern is generated by pilot sub-carrier signals transmitted by the base station. That is, the pilot pattern is based on a slope of the pilot sub-carrier signals and a transmission start point of the pilot sub-carrier signals. Therefore, the OFDM communication system should be designed such that base stations have their own unique pilot patterns for their identification. In addition, the pilot pattern is generated considering a coherence bandwidth and a coherence time.

The coherence bandwidth represents a maximum bandwidth where it can be assumed that a channel is constant, in a frequency domain. The coherence time represents a maximum time where it can be assumed that a channel is constant, in a time domain. Because it can be assumed that a channel is constant within the coherence bandwidth and the coherence time, even though only one pilot sub-carrier signal is transmitted for the coherence bandwidth and coherence time, it is sufficient for synchronization acquisition, channel estimation, and base station identification. As a result, it is possible to maximize transmission of data channel signals, thereby contributing to improvement in entire system performance. In conclusion, a maximum frequency interval for transmitting pilot sub-carrier signals is a coherence bandwidth, and a maximum time interval, or a maximum OFDM symbol time interval, for transmitting the pilot sub-carrier signals is a coherence time.

The number of base stations included in an OFDM communication system is variable. Therefore, in order to identify all the base stations, the number of pilot patterns having different slopes and different start points should be identical to the number of the base stations. However, in the OFDM communication system, in order to transmit a pilot sub-carrier signal in a time-frequency domain, the coherence bandwidth and the coherence time should be considered. When the coherence bandwidth and the coberence time are considered, the pilot patterns having different slopes and different start points are restrictively generated. When pilot patterns are generated without considering the coherence bandwidth and the coherence time, pilot sub-carrier signals in the pilot patterns representing different base stations coexist. In this case, it is not possible to identify a base station using the pilot patterns.

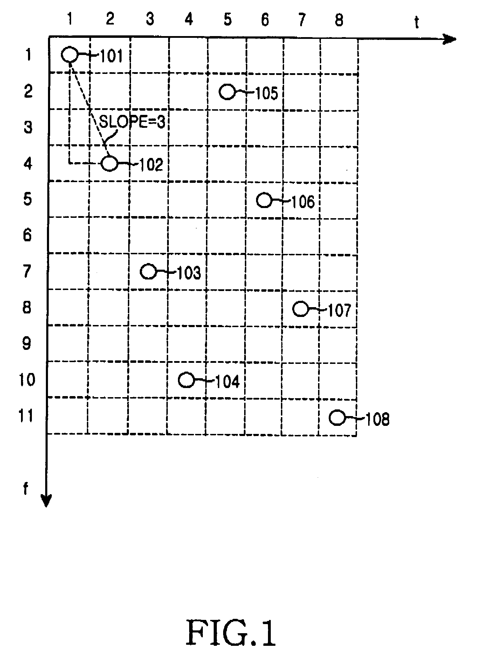

FIG. 1 is a diagram schematically illustrating points where pilot sub-carrier signals based on a pilot pattern are transmitted in a conventional OFDM communication system using one pilot channel. However, before a description of FIG. 1 is given, it is assumed that circles illustrated in FIG. 1 represent points where pilot sub-carrier signals are actually transmitted, and transmission points of the pilot sub-carrier signals are expressed in the form of (time domain, frequency domain).

Referring to FIG. 1, a first pilot sub-carrier signal is transmitted at a (1,1) point 101, a second pilot sub-carrier signal is transmitted at a (2,4) point 102, a third pilot sub-carrier signal is transmitted at a (3,7) point 103, a fourth pilot sub-carrier signal is transmitted at a (4,10) point 104, a fifth pilot sub-carrier signal is transmitted at a (5,2) point 105, a sixth pilot sub-carrier signal is transmitted at a (6,5) point 106, a seventh pilot sub-carrier signal is transmitted at a (7,8) point 107, and an eighth pilot sub-carrier signal is transmitted at a point (8,11) 108. It is assumed in FIG. 1 that 8 OFDM symbols constitute one OFDM frame, and 8 pilot sub-carrier signals constitute one pilot channel.

In the pilot channel illustrated in FIG. 1, the start point is (1,1) 101 and the slope is 3. That is, a pilot sub-carrier signal is transmitted beginning at the (1,1) point 101. Thereafter, the other pilot sub-carrier signals are transmitted with a slope of 3. In addition, pilot channel based on a pilot pattern transmitted in the time-frequency domain are represented by Equation (1).

$$\sigma_s(j,t) = st + n_j(\text{mod } N), \text{ for } j = 1, \cdots, N_p \qquad (1)$$

In Equation (1), $\sigma_s(j,t)$ denotes a transmission point of a $j^{th}$ pilot channel having a slope 's' at a time t, $n_j$ is a frequency offset and denotes a point where a first pilot sub-carrier signal is separated from the origin of the time-frequency domain, N denotes the total number of sub-carriers of the OFDM communication system, and $N_p$ denotes the number of pilot channels. Here, the number $N_p$ of pilot channels is previously determined in the OFDM communication system, and known to both a transmitter and a receiver.

As a result, for the pilot pattern illustrated in FIG. 1, a slope 's' is 3 (s=3), a frequency offset $n_j$ is 0 ($n_j$=0), the total number N of sub-carriers of the OFDM communication system is 11 (N=11), and the number $N_p$ of pilot channels is 1 ($N_p$=1).

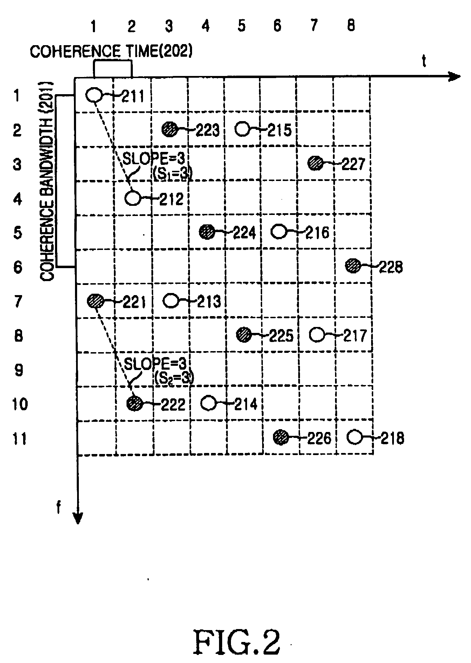

FIG. 2 is a diagram schematically illustrating points where pilot sub-carrier signals based on a pilot pattern are transmitted in a conventional OFDM communication system using two pilot channels. However, before a description of FIG. 2 is given, it is assumed that circles illustrated in FIG. 2 represent points where pilot sub-carrier signals are actually transmitted, and transmission points of the pilot sub-carrier signals are expressed in the form of (time domain, frequency domain). Further, it is assumed in FIG. 2 that a coherence bandwidth 201 corresponds to 6 sub-carriers, and a coherence time 202 is 1 in a time domain, i.e., the coherence time 202 is one OFDM symbol. As assumed above, because the coherence bandwidth 201 corresponds to 6 sub-carriers and the coherence time 202 is one OFDM symbol, a pilot sub-carrier signal must be separated by a bandwidth corresponding to a maximum of 6 sub-carriers and transmitted for at least one OFDM symbol in order to reflect its channel condition.

Alternatively, a plurality of pilot sub-carrier signals can be transmitted within the coherence bandwidth 201. In this case, however, less data channel signals are transmitted due to transmission of the pilot sub-carrier signals, resulting in a decrease in data rate. Therefore, in FIG. 2, only one pilot channel signal is transmitted within the coherence bandwidth 201.

Referring to FIG. 2, two pilot channels, i.e., a first pilot channel and a second pilot channel, are illustrated. For the first pilot channel, a first pilot sub-carrier signal is transmitted at a (1,1) point 211, a second pilot sub-carrier signal is transmitted at a (2,4) point 212, a third pilot sub-carrier signal is transmitted at a (3,7) point 213, a fourth pilot sub-carrier signal is transmitted at a (4,10) point 214, a fifth pilot sub-carrier signal is transmitted at a (5,2) point 215, a sixth pilot sub-carrier signal is transmitted at a (6,5) point 216, a seventh pilot sub-carrier signal is transmitted at a (7,8) point 217, and an eighth pilot sub-carrier signal is transmitted at a point (8,11) 218. For the second pilot channel, a first pilot sub-carrier signal is transmitted at a (1,7) point 221, a second pilot sub-carrier signal is transmitted at a (2,10) point 222, a third pilot sub-carrier signal is transmitted at a (3,2) point 223, a fourth pilot sub-carrier signal is transmitted at a (4,5) point 224, a fifth pilot sub-carrier signal is transmitted at a (5,8) point 225, a sixth pilot sub-carrier signal is transmitted at a (6,11) point 226, a seventh pilot sub-carrier signal is transmitted at a (7,3) point 227, and an eighth pilot sub-carrier signal is transmitted at a point (8,6) 228.

As a result, for the first pilot channel, a slope 's$_1$' is 3 (s$_1$=3), a frequency offset n$_j$ is 0 (n$_j$=0), the total number N of sub-carriers of the OFDM communication system is 11 (N=11). In addition, for the second pilot channel, a slope 's$_2$' is 3 (s$_2$=3), a frequency offset n$_j$ is 6 (n$_j$=6), the total number N of sub-carriers of the OFDM communication system is 11 (N=11). For a pilot pattern, first pilot channel and the second pilot channel have the same pilot pattern, because the frequency offset n$_j$ of the second pilot channel is determined to a next pilot channel of the first pilot channel by the coherence bandwidth 201 and the coherence time 202, and the number N$_p$ of pilot channels is 2 (N$_p$=2).

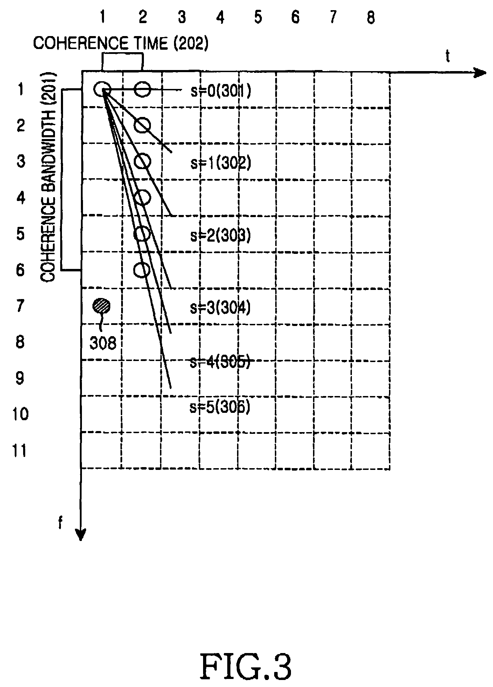

FIG. 3 is a diagram schematically illustrating all possible slopes for a pilot pattern in a conventional OFDM communication system. Referring to FIG. 3, possible slopes for a pilot pattern and the number of the slopes, i.e., possible slopes for transmission of pilot channel signals and the number of the slopes, are limited according to the coherence bandwidth 201 and the coherence time 202. Assuming that the coherence bandwidth 201 is 6 and the coherence time 202 is 1, as described in connection with FIG. 2, if a slope of a pilot pattern is an integer, there are 6 possible slopes of s=0 (301) to s=5 (306) for a pilot pattern. That is, in this condition, a possible slope for a pilot pattern becomes one of integers of 0 to 5. When the number of possible slopes for a pilot pattern is 6, this means that the number of base stations that can be identified using the pilot pattern in an OFDM communication system satisfying the above condition is 6. In addition, a shaded circle 308 illustrated in FIG. 3 represents a pilot sub-carrier signal separated by the coherence bandwidth 201.

All possible slopes for a pilot pattern are determined by Equation (2).

$$s_{val} = \left[ 0, \cdots, \frac{B_c - 1}{T_c} \right] \qquad \ldots\ldots\ldots\ldots (2)$$

In Equation (2), s$_{val}$ denotes possible slopes for a pilot pattern in an OFDM communication system. Although it is preferable that the slopes for a pilot pattern are integers, it is not necessary that the slopes for a pilot pattern should be integers. Further, in Equation (2), T$_c$ denotes the number of basic data units constituting a coherence time in the time domain. In FIG. 3, a basic data unit constituting the coherence time is an OFDM symbol, and thus, the T$_c$ represents the number of OFDM symbols. In addition, in Equation (2), B$_c$ denotes the number of basic sub-carrier units constituting the coherence bandwidth in the frequency domain.

Actually, the maximum number of possible slopes for a pilot pattern is represented by Equation (3).

$$S_{no\_max} = \frac{B_c}{T_c} \qquad (3)$$

In Equation (3), S$_{no\_max}$ denotes the maximum number of possible slopes for a pilot pattern in the OFDM communication system.

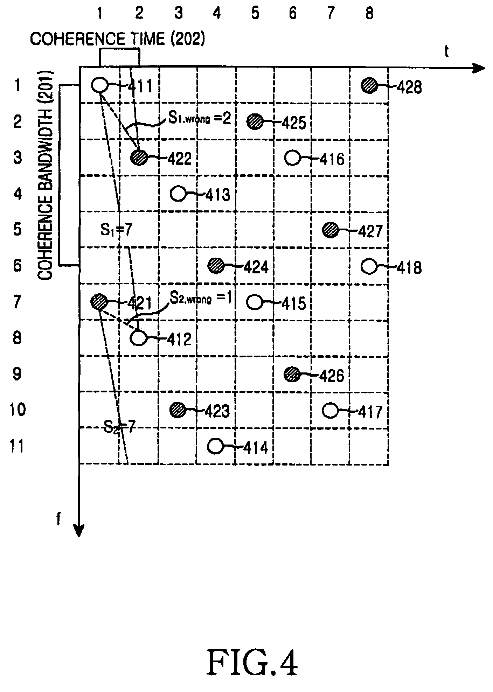

FIG. 4 is a diagram schematically illustrating an operation in which a pilot pattern generated without considering a coherence bandwidth is incorrectly estimated in a conventional OFDM communication system. However, before a description of FIG 4 is given, it is assumed that circles illustrated in FIG. 4 represent points where pilot sub-carrier signals are actually transmitted, and transmission points of the pilot sub-carrier signals are expressed in the form of (time domain, frequency domain). Further, it is assumed in FIG. 4 that the coherence bandwidth 201 is 6 in a frequency domain, i.e., the coherence bandwidth 201 corresponds to 6 sub-carriers, and the coherence time 202 is 1 in a time domain, i.e., the coherence time 202 is one OFDM symbol. Two pilot channels of one pilot pattern, illustrated in FIG.

4, are generated without considering the coherence bandwidth 201.

Referring to FIG. 4, a slope $s_1$ of the first pilot channel is 7 ($s_1$=7), and the slope $s_1$=7 of the first pilot channel exceeds a maximum slope 5 for the first pilot channel. Also, a slope $s_2$ of the second pilot channel is 7 ($s_2$=7), and the slope $s_2$=7 of the second pilot channel exceeds the maximum slope 5 for the second pilot channel. When a slope of a pilot channel exceeds a maximum slope in this way, the slope of the pilot channel may be incorrectly estimated. A detailed description thereof will be shown below.

For the first pilot channel, a first pilot sub-carrier signal is transmitted at a (1,1) point 411, a second pilot sub-carrier signal is transmitted at a (2,8) point 412, a third pilot sub-carrier signal is transmitted at a (3,4) point 413, a fourth pilot sub-carrier signal is transmitted at a (4,11) point 414, a fifth pilot sub-carrier signal is transmitted at a (5,7) point 415, a sixth pilot sub-carrier signal is transmitted at a (6,3) point 416, a seventh pilot sub-carrier signal is transmitted at a (7,10) point 417, and an eighth pilot sub-carrier signal is transmitted at a point (8,6) 418.

For the second pilot channel, a first pilot sub-carrier signal is transmitted at a (1,7) point 421, a second pilot sub-carrier signal is transmitted at a (2,3) point 422, a third pilot sub-carrier signal is transmitted at a (3,10) point 423, a fourth pilot sub-carrier signal is transmitted at a (4,6) point 424, a fifth pilot sub-carrier signal is transmitted at a (5,2) point 425, a sixth pilot sub-carrier signal is transmitted at a (6,9) point 426, a seventh pilot sub-carrier signal is transmitted at a (7,5) point 427, and an eighth pilot sub-carrier signal is transmitted at a point (8,1) 428.

However, because both the slope of the first pilot channel and the slope of the second pilot channel exceed the maximum slope 5 as illustrated in FIG 4, a receiver or a mobile station, may incorrectly estimate the slope of the first pilot channel and the slope of the second pilot channel. For example, even though the slope of the first pilot channel is 7, the mobile station estimates the slope of the first pilot channel based on a first pilot signal in the first pilot channel and a second pilot signal in the second pilot channel, thereby incorrectly estimating that the slope of the first pilot pattern is 2 ($s_{1,wrong}$=2). Because a slope of the first pilot channel is set to 7 without considering the maximum slope 5 of the first pilot channel, i.e., the coherence bandwidth 201 of 6, a pilot signal in another pilot channel, i.e., the second pilot channel, is mistaken for a pilot signal in the first pilot channel. Likewise, even though the slope of the second pilot channel is 7, the mobile station estimates the slope of the second pilot channel based on a first pilot signal in the second pilot channel and a second pilot signal in the first pilot channel, thereby incorrectly estimating that the slope of the second pilot pattern is 1 ($s_{2,wrong}$=1). Because a slope of the second pilot channel was set to 7 without considering the maximum slope 5 of the second pilot channel, i.e., the coherence bandwidth 201 of 6, a pilot signal in another pilot channel, i.e., the first pilot channel, is mistaken for a pilot signal in the second pilot channel.

Therefore, due to the characteristic that a slope of the pilot channel is an integer and limited to a coherence bandwidth, a relationship between a positive slope and a negative slope of the pilot channel is defined as in Equation (4)

$$s^+ = \text{(coherence bandwidth)} - s^- \tag{4}$$

In Equation (4), $s^+$ denotes a positive slope of a pilot channel, and $s^-$ denotes a negative slope of the pilot channel. The positive slope and the negative slope make a pair while satisfying Equation (2).

As described above, in the conventional OFDM communication system, because generating a pilot pattern used to identify base stations is limited by a coherence bandwidth and a coherence time, the number of possible pilot patterns is also limited. Therefore, disadvantageously, when the number of base stations in the OFDM communication system is increased, the number of base stations that can be identified with the pilot pattern is limited by the number of possible pilot patterns.

## SUMMARY OF THE INVENTION

It is, therefore, an object of the present invention to provide an apparatus and method for transmitting and receiving a pilot pattern set for identifying base stations in an OFDM communication system.

It is another object of the present invention to provide an apparatus and method for generating a pilot pattern set for identifying base stations in an OFDM communication system.

It is further another object of the present invention to provide an apparatus and method for maximizing the number of pilot patterns for identifying base stations in an OFDM communication system.

In accordance with one aspect of the present invention, there is provided a method for generating base station identification patterns for individually identifying base stations within cells to which mobile stations belong, in a radio communication system transmitting reference signals for identifying a plurality of base stations, from the base stations to the mobile stations. The method comprises: dividing a frequency domain into a plurality of sub-bands in a frequency-time domain given with a frequency domain and a time domain; and, determining reference signal patterns at each of the plurality of sub-bands.

In accordance with another aspect of the present invention, there is provided a method for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals are transmitted. The method comprises: dividing the entire frequency band into a predetermined number of sub-bands; calculating possible reference signal patterns at each of the sub-bands, considering a predetermined time domain and a predetermined frequency domain; selecting a predetermined number of reference signal patterns among the calculated reference signal patterns at each of the sub-bands; and, combining the selected reference signal patterns selected at each of the sub-bands, thereby generating base station identification patterns for identification of the base station.

In accordance with further another aspect of the present invention, there is provided a method for generating base station identification patterns for individually identifying base stations within cells to which mobile stations belong, in a radio communication system transmitting reference signals for identifying the base stations, from the base stations to the mobile stations. The method comprises: forming a plurality of sub-blocks by dividing a frequency domain into a plurality of sub-bands, and dividing a time domain into a plurality of sub-time periods in a frequency-time domain given with the frequency domain and the time domain; and, determining reference signal patterns at each of the sub-blocks.

In accordance with further another aspect of the present invention, there is provided a method for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands in which the reference signals are transmitted. The method comprises: forming a plurality of sub-blocks by dividing the entire frequency band into a predetermined number of sub-bands and dividing a time domain into a predetermined number of sub-time periods; calculating possible reference signal patterns at each of the sub-blocks considering a predetermined time domain and a predetermined frequency domain; selecting a predetermined number of reference signal patterns among the calculated reference signal patterns at each of the sub-blocks; and, combining the selected reference signal patterns, thereby determining base station identification patterns of the base stations.

In accordance with yet another aspect of the present invention, there is provided a method for transmitting, by a base station, a base station identification pattern for identifying the base station in a radio communication system that divides an entire frequency band into a plurality of sub-frequency bands, transmits reference signals at least one of the sub-frequency bands, and transmits data signals at the sub-frequency bands, excluding the sub-frequency bands at which the reference signals are transmitted. The method comprises: receiving parallel-converted data signals; generating reference signals corresponding the base station identification pattern for identifying a base station; inserting the reference signals into the parallel-converted data signals; IFFT (Inverse Fast Fourier Transform)-converting the parallel-converted data signals into which the reference signals are inserted; serial-converting the IFFT-converted parallel signals; inserting a predetermined guard interval signal into the serial-converted signals; and, transmitting the guard interval-inserted signals.

In accordance with further another aspect of the present invention, there is provided a method for receiving, by a mobile station, a base station identification pattern for identifying a base station in a radio communication system that divides an entire frequency band into a plurality of sub-frequency bands, transmits reference signals at least one of the sub-frequency bands, and transmits data signals at the sub-frequency bands, excluding the sub-frequency bands at which the reference signals are transmitted. The method comprises: removing a guard interval signal from a received signal at a predetermined period; parallel-converting the guard interval-removed signal; FFT (Fast Fourier Transform)-converting the parallel-converted signal; extracting reference signals from the FFT-converted signals; detecting a base station identification pattern from the extracted reference signals; and, identifying the base station to which the mobile station belongs.

In accordance with further another aspect of the present invention, there is provided an apparatus for generating base station identification patterns for individually identifying base stations within cells to which mobile stations belong, in a radio communication system transmitting reference signals for identifying a plurality of base stations, from the base stations to the mobile stations. The apparatus comprises: a sub-band and reference signal pattern number calculator for dividing a frequency region into a plurality of sub-bands in a frequency-time domain given with a frequency domain and a time domain, and calculating reference signal patterns at each of the plurality of sub-bands; and a base station identification pattern determiner for selecting a predetermined number of reference signal patterns among the calculated reference signal patterns at each of the plurality of sub-bands and combining the selected reference signal patterns, thereby generating base station identification patterns for identification of the base stations.

In accordance with yet another aspect of the present invention, there is provided an apparatus for generating base station identification patterns for individually identifying base stations included a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals are transmitted. The apparatus comprises: a sub-band and reference signal pattern number calculator for dividing the entire frequency band into a predetermined number of sub-bands, and calculating possible reference signal patterns at each of the sub-bands, considering a predetermined time domain and a predetermined frequeney domain; and a base station identification pattern determiner for selecting a predetermined number of reference signal patterns among the calculated reference signal patterns at each of the sub-bands and combining the selected reference signal patterns, thereby generating base station identification patterns for identification of the base station.

In accordance with further another aspect of the present invention, there is provided an apparatus for generating base station identification patterns for identifying base stations within cells to which mobile stations belong, in a radio communication system transmitting reference signals for identifying the base stations, from the base stations to the mobile stations. The apparatus comprises: a sub-block and reference signal pattern number calculator for forming a plurality of sub-blocks by dividing a frequency domain into a plurality of sub-bands, and dividing a time domain into a plurality of sub-time periods in a frequency-time domain given with the frequency domain and the time domain, and calculating reference signal patterns at each of the sub-blocks; and a base station identification pattern determiner for selecting a predetermined number of reference signal patterns among the calculated reference signal patterns at each of the sub-bands, and combining the selected reference signal patterns, thereby generating base station identification patterns for identification of the base station.

In accordance with yet another aspect of the present invention, there is provided an apparatus for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals are transmitted. The apparatus comprises: a sub-block and reference signal pattern number calculator for forming a plurality of sub-blocks by dividing the entire frequency band into a predetermined number of sub-bands and dividing a time domain into a predetermined number of sub-time periods, and calculating possible reference signal patterns at each of the sub-blocks, considering a predetermined time domain and a predetermined frequency domain; and a base station identification pattern determiner for selecting a predetermined number of reference signal patterns among the calculated reference signal patterns at each of the sub-blocks and combining the selected reference signal patterns, thereby generating base station identification patterns for identification of the base stations.

In accordance with further another aspect of the present invention, there is provided an apparatus for receiving, by a mobile station, a base station identification pattern for identifying a base station in a radio communication system that divides an entire frequency band into a plurality of sub-frequency bands, transmits reference signals at least one of the sub-frequency bands, and transmits data signals at the sub-frequency bands, excluding the sub-frequency bands at which the reference signals are transmitted. The apparatus comprises: a receiver for removing a guard interval signal from a received signal at a predetermined period, and parallel-converting the guard interval-removed signal; a fast Fourier transform (FFT) block for FFT-converting a signal output from the receiver; a reference signal extractor for extracting reference signals from the FFT-converted signals; and a synchronization and channel estimator for detecting a base station identification pattern from the reference signals extracted from the reference signal extractor, and identifying the base station to which the mobile station belongs.

**BRIEF DESCRIPTION OF THE DRAWINGS**

The above and other objects, features, and advantages of the present invention will become more apparent from the following detailed description when taken in conjunction with the accompanying drawings in which:

FIG 1 is a diagram schematically illustrating points where pilot sub-carrier signals based on a pilot pattern are transmitted in a conventional OFDM communication system using one pilot channel;

FIG. 2 is a diagram schematically illustrating points where pilot sub-carrier signals based on a pilot pattern are transmitted in a conventional OFDM communication system using two pilot channel;

FIG. 3 is a diagram schematically illustrating all possible slopes for a pilot pattern in a conventional OFDM communication system;

FIG 4 is a diagram schematically illustrating an operation in which a pilot pattern generated without considering a coherence bandwidth is incorrectly estimated in a conventional OFDM communication system;

FIGs. 5A and 5B are diagrams schematically illustrating points where pilot sub-carrier signals based on a pilot pattern set are transmitted in an OFDM communication system according to a first embodiment of the present invention

FIG. 6 is a flowchart illustrating a procedure for assigning a pilot pattern set according to the first embodiment of the present invention;

FIG 7 is a block diagram illustrating an internal structure of an apparatus for assigning a pilot pattern set according to the first embodiment of the present invention;

FIG 8 is a diagram schematically illustrating positions where pilot sub-carrier signals based on a pilot pattern set are transmitted in an OFDM communication system according to a second embodiment of the present invention;

FIG 9 is a flowchart illustrating a procedure for assigning a pilot pattern set according to the second embodiment of the present invention;

FIG 10 is a block diagram illustrating an internal structure of an apparatus for assigning a pilot pattern set according to the second embodiment of the present invention; and

FIG. 11 is a block diagram schematically illustrating an OFDM communication system for implementing embodiments of the present invention.

## DETAILED DESCRIPTION OF THE PREFERRED EMBODIMENT

Several preferred embodiments of the present invention will now be described in detail herein below with reference to the annexed drawings. In the following description, a detailed description of known functions and configurations incorporated herein has been omitted for conciseness.

The present invention provides a method for generating a pilot pattern for identifying a base station (BS) in a communication system utilizing an Orthogonal Frequency Division Multiplexing (OFDM) system (hereinafter referred to as an "OFDM communication system"). More specifically, a first embodiment of the present invention provides a method for dividing an entire frequency band used in an OFDM communication system into a plurality of sub-bands, and generating a pilot pattern at each of the sub-bands, thereby maximizing the total number of pilot patterns available in the OFDM communication system. Further, a second embodiment of the present invention provides a method for dividing an entire frequency band used in an OFDM communication system into a plurality of sub-bands, and generating a pilot pattern at each of sub-blocks formed by dividing a predetermined time period, or a BS identification pattern time period necessary for identification of the pilot pattern, into a plurality of sub-time periods, thereby maximizing the total number of pilot patterns available in the OFDM communication system.

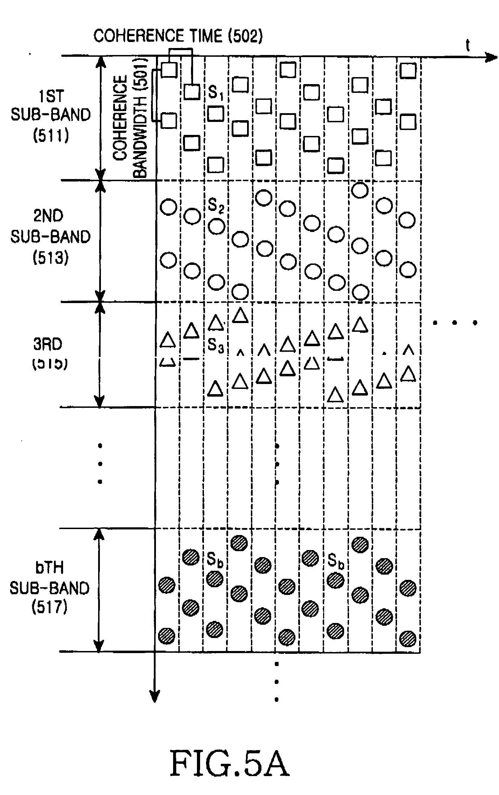

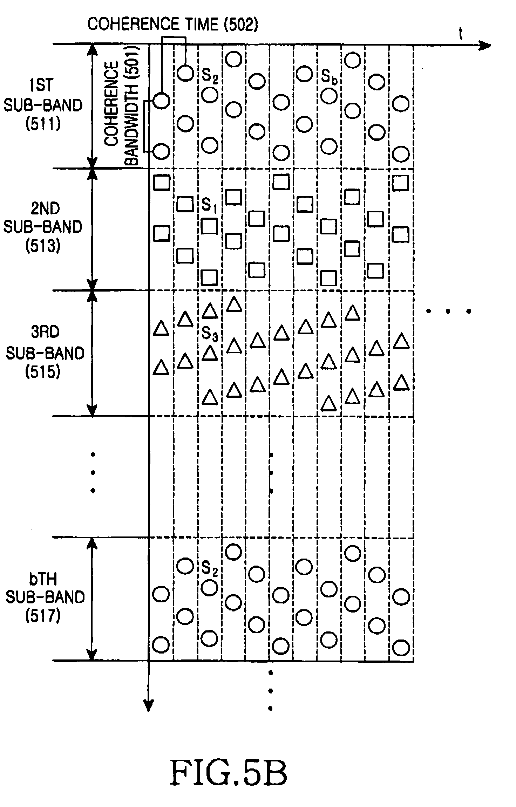

FIGs. 5A and 5B are diagrams schematically illustrating points where pilot sub-carrier signals based on a pilot pattern set are transmitted in an OFDM communication system according to a first embodiment of the present invention. However, before a description of FIGs. 5A and 5B is given, it should be noted that in the OFDM communication system, a transmitter, or a base station, transmits pilot sub-carrier signals to a receiver, or a mobile station (MS). The base station transmits data sub-carrier (hereinafter referred to as "data channel") signals together with the pilot sub-carrier signals. The pilot sub-carrier signals are transmitted for synchronization acquisition, channel estimation, and base station identification. The pilot sub-carrier signals serve as a type of a training sequence, and are used for performing channel estimation between a transmitter and a receiver. Further, mobile stations identify their base stations using the pilot sub-carrier signals. Additionally, points where the pilot sub-carrier signals are transmitted have been previously agreed between the transmitter and the receiver.

Further, the pilot pattern means a pattern generated by pilot sub-carrier signals transmitted from a base station. That is, the pilot pattern is generated based on a slope of the pilot sub-carrier signals and a transmission start point of the pilot sub-carrier signals. Therefore, the OFDM communication system should be designed such that base stations have their own unique pilot patterns for their identification. In addition, the pilot pattern is generated considering a coherence bandwidth and a coherence time. The coherence bandwidth represents a maximum bandwidth where it can be assumed that a channel is constant, in a frequency domain. The coherence time represents a maximum time where it can be assumed that the channel is constant, in a time domain. Because it can be assumed that the channel is constant within the coherence bandwidth and coherence time, even though only one pilot sub-carrier signal is transmitted for the coherence bandwidth and coherence time, it is sufficient for synchronization acquisition, channel estimation, and base station identification. As a result, it is possible to maximize transmission of data channel signals, thereby contributing to improvement in entire system performance.

Therefore, in a common OFDM communication system, a maximum frequency interval for transmitting pilot sub-carrier signals is regarded as a coherence bandwidth, and a maximum time interval, or a maximum OFDM symbol time interval, for transmitting the pilot sub-carrier signals is regarded as a coherence time. The pilot patterns are also limited in number because they are generated considering the coherence bandwidth and the coherence time.

The limitation in number of the pilot patterns causes lack of pilot patterns for distinguishing an increasing number of base stations of the OFDM communication system. Therefore, the first embodiment of the present invention provides a method for dividing an entire frequency band of the OFDM communication system into a plurality of sub-bands, and independently generating a pilot pattern at each of the sub-bands. More specifically, the entire frequency band of the OFDM communication system can be divided into a plurality of sub-frequency bands corresponding to sub-carriers. The plurality of sub-frequency bands are generated into several groups, and the groups of sub-frequency bands become the sub-bands.

FIG. 5A illustrates points where pilot sub-carrier signals are transmitted according to a pilot pattern set assigned to the first base station. Referring to FIG. 5A, an entire frequency band is divided into b sub-bands of a first sub-band 511 to a $b^{th}$ sub-band 517. At each of the b sub-bands of the first sub-band 511 to the $b^{th}$ sub-band 517, a pilot pattern is generated considering a coherence bandwidth 501 and a coherence time 502. For the convenience of explanation, it is assumed in FIG. 5A that only one pilot sub-carrier signal is transmitted for the coherence bandwidth 501 and the coherence time 502. Alternatively, a plurality of pilot sub-carrier signals can be transmitted for the coherence bandwidth 501 and the coherence time 502. Further, although the first sub-band 511 to the $b^{th}$ sub-band 517 are identical in size in FIG. 5A, they can also be different in size.

Referring to FIG. 5A, a pilot pattern of the first sub-band 511 has a slope $s_1$, a pilot pattern of a second sub-band 513 has a slope $s_2$, a pilot pattern of a third sub-band 515 has a slope $s_3$, and a pilot pattern of the $b^{th}$ sub-band 517 has a slope $s_b$. As a result, in order to identify the first base station, a mobile station must have information on a slope set of all pilot patterns available in the first base station, i.e., a set $[s_1, s_2, s_3, \cdots, s_b]$ of pilot pattern slopes selected at the first sub-band 511 to the $b^{th}$ sub-band 517 among slopes of pilot patterns individually generated at the first sub-band 511 to the $b^{th}$ sub-band 517. If the slope set of pilot patterns is previously agreed between a transmitter, or a first base station, and a receiver, or a mobile station, the mobile station can identify the first base station. Herein, a slope set of pilot patterns used for identifying a base station will be referred to as a "pilot pattern set." That is, a pilot pattern set is assigned to each of base stations constituting the OFDM communication system, and a mobile station identifies a pilot pattern set of its base station among a plurality of pilot pattern sets. That is, the pilot pattern set becomes a kind of a base station identification pattern for identifying the base stations.

The mobile station detects slopes of pilot patterns assigned to the first sub-band 511 to the $b^{th}$ sub-band 517, and detects a pilot pattern set, i.e., a set of slopes of the pilot patterns. Further, the mobile station detects a base station corresponding to the pilot pattern set, and determines the detected base station as its base station, i.e., a first base station.

FIG. 5B illustrates points where pilot sub-carrier signals are transmitted according to a pilot pattern set assigned to a second base station being different from the first base station. Referring to FIG 5B, an entire frequency band is divided into b sub-bands of a first sub-band 511 to a $b^{th}$ sub-band 517. At each of the b sub-bands of the first sub-band 511 to the $b^{th}$ sub-band 517, a pilot pattern is generated considering a coherence bandwidth 501 and a coherence time 502. For the convenience of explanation, it is assumed in FIG. 5B that only one pilot sub-carrier signal is transmitted for the coherence bandwidth 501 and the coherence time 502. Alternatively, a plurality of pilot sub-carrier signals can be transmitted for the coherence bandwidth 501 and the coherence time 502. Here, the sub-bands of FIGs. 5A and 5B are different in selecting a slope of pilot patterns generated at the respective sub-bands. By generating a pilot pattern set by selecting different slopes for pilot patterns of the respective sub-bands, it is possible to identify different base stations.

A pilot pattern of the first sub-band 511 has a slope $s_2$, a pilot pattern of a second sub-band 513 has a slope $s_1$, a pilot pattern of a third sub-band 515 has a slope $s_3$, and a pilot pattern of the $b^{th}$ sub-band 517 has a slope $s_2$. As a result, in order to identify the second base station, a mobile station should have information on a slope set of pilot patterns assigned to the second base station, i.e., a set $[s_2, s_1, s_3, \cdots, s_2]$ of pilot pattern slopes selected at the first sub-band 511 to the $b^{th}$ sub-band 517 among slopes of pilot patterns individually generated at the first sub-band 511 to the $b^{th}$ sub-band 517. If the slope set of pilot patterns is previously agreed between a transmitter, or a second base station, and a receiver, or a mobile station, the mobile station can identify the second base station.

An entire frequency band of the OFDM communication system is divided into b sub-bands. At each of the b sub-bands, pilot patterns are generated considering a coherence bandwidth and a coherence time. For example, it will be assumed that the number of pilot patterns available at each of the sub-bands (i.e., that can be generated at each of the sub-bands) is M. One pilot pattern is selected from the M pilot patterns available at each of the sub-bands, and a slope set of the pilot pattern selected at each sub-band is generated into a pilot pattern set, When the pilot pattern set is generated in this way, the number of possible pilot pattern sets is determined by Equation (5).

$$\text{number of pilot pattern sets} = s_{max}{}^{b} \tag{5}$$

In Equation (5), 'number of pilot pattern sets' denotes the number of pilot pattern sets available in an OFDM communication system, $S_{max}$ denotes the maximum number of pilot patterns, i.e., the number of slopes of pilot patterns available at each sub-band of the OFDM communication system, and b denotes the number of sub-bands of the OFDM communication system. For example, if the maximum number of pilot patterns available at each of the sub-bands is 4 ($s_{max}=4$) and the number of sub-bands of the OFDM communication system is 5 (b=5), the total number of base stations that can be identified by the OFDM communication system is 1024 ($4^5=1024$).

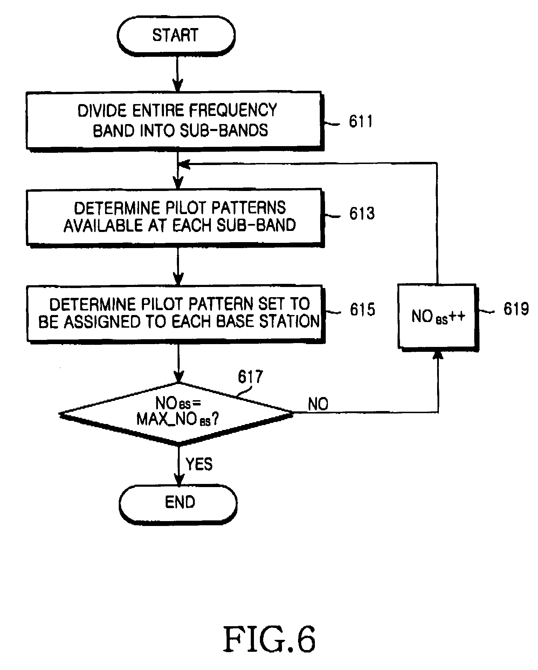

FIG. 6 is a flowchart illustrating a procedure for assigning a pilot pattern set according to a first embodiment of the present invention. However, before a description of FIG. 6 is given, it should be noted that a controller (not shown) for an upper layer of an OFDM communication system assigns a pilot pattern set to each of base station constituting the OFDM communication system in order to perform the procedure illustrated FIG. 6. Further, the controller notifies each base station of information on a pilot pattern set assigned thereto, and also notifies each mobile station of the same information. Then each base station transmits a pilot signal for base station identification according to the pilot pattern set assigned thereto, and a mobile station determines to which base station it belongs, using a pilot pattern set of the received pilot signal.

Referring to FIG. 6, in step 611, the controller divides an entire frequency band of the OFDM communication system into a plurality of sub-bands. Here, the number of sub-bands into which the entire frequency band of the OFDM communication system is divided can be variably determined according to a characteristic of the OFDM communication system. In step 613, the controller determines pilot patterns available at each of the divided sub-bands. Here, the pilot patterns available at each of the sub-bands are determined considering a coherence bandwidth and a coherence time, as described above.

In step 615, the controller determines a pilot pattern set to be assigned to each of base stations constituting the OFDM communication system. Here, the pilot pattern set is generated by selecting one of pilot patterns available at each of the sub-bands, and as described above, the pilot pattern set refers to a set of pilot patterns selected for each of the sub-bands. In step 617, the controller determines whether the number $NO_{BS}$ of the currently determined pilot pattern sets is identical to the total number $MAX\_NO_{BS}$ of base stations constituting the OFDM communication system. If it is determined that the number $NO_{BS}$ of the currently determined pilot pattern sets is not identical to the total number $MAX\_NO_{BS}$ of base stations constituting the OFDM communication system, in step 619, the controller increases the number $NO_{BS}$ of the currently determined pilot pattern sets by 1 ($BO_{BS}$++), and then returns to step 613.

However, if it is determined in step 617 that the number $NO_{BS}$ of the currently determined pilot pattern sets is identical to the total number $MAX\_NO_{BS}$ of base stations constituting the OFDM communication system, the controller ends the ongoing procedure.

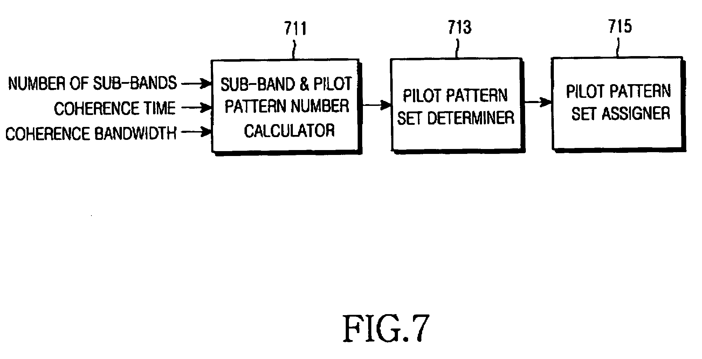

FIG. 7 is a block diagram illustrating an internal structure of an apparatus for assigning a pilot pattern set according to the first embodiment of the present invention. Referring to FIG. 7, the pilot pattern set assigning apparatus includes a sub-band & pilot pattern number calculator 711, a pilot pattern set determiner 713, and a pilot pattern set assignor 715. The sub-band & pilot pattern number calculator 711 receives information on the number 'b' of sub-bands into which an entire frequency band of the OFDM communication system is to be divided, a coherence time, and a coherence bandwidth, and calculates the number of pilot patterns available at each of the b sub-bands considering the received information on the number 'b' of sub-bands, the coherence time, and the coherence bandwidth. For example, it is assumed that the number of pilot patterns available at each of the b sub-bands is $s_{max}$. That is, at each of the b sub-bands, pilot patterns having slopes $[s_1, \cdots, s_{max}]$ of $s_1$ to $s_{max}$ can be generated.

The sub-band & pilot pattern number calculator 711 outputs information on the number $s_{max}$ of the pilot patterns available at each of the b sub-bands to the pilot pattern set determiner 713. The pilot pattern set determiner 713 receives the information on the number $s_{max}$ of the pilot patterns available at each of the b sub-bands, and determines a pilot pattern set by selecting one of the pilot patterns available at each of the b sub-bands. Here, the number of the pilot pattern sets is determined based on the number of pilot patterns available at each of the sub-bands and the number of sub-bands, as described above in connection with Equation (5).

The pilot pattern set determiner 713 outputs the determined pilot pattern sets to the pilot pattern set assignor 715. The pilot pattern set assigner 715 receives the pilot pattern sets output from the pilot pattern set determiner 713, and assigns the pilot pattern sets to each of base stations constituting the OFDM communication system.

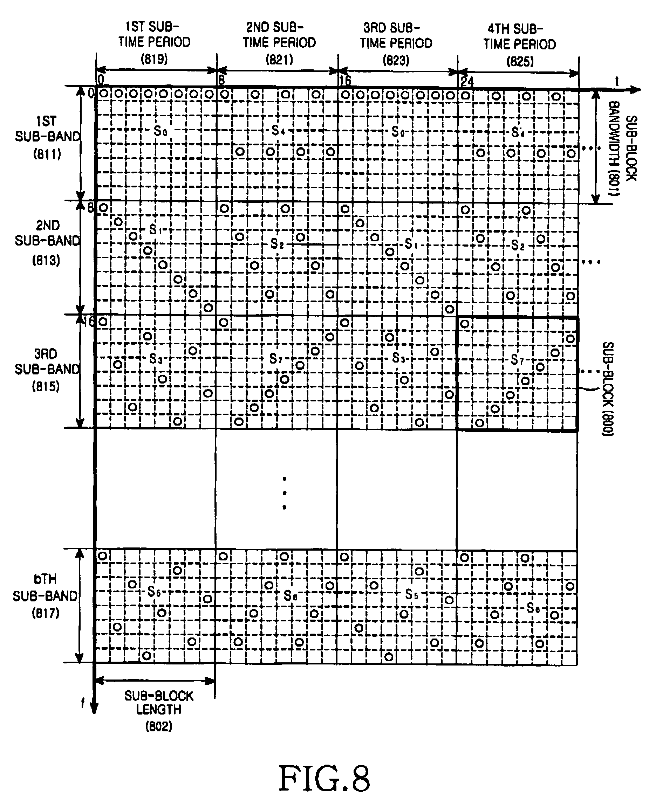

FIG. 8 is a diagram schematically illustrating positions where pilot sub-carrier signals based on a pilot pattern set are transmitted in an OFDM communication system according to a second embodiment of the present invention. However, before a description of FIG. 8 is given, the following should be noted. While the first embodiment of the present invention proposes a method for dividing an entire frequency band of the OFDM communication system into a plurality of sub-bands and generating a pilot pattern set by selecting one of the pilot patterns available at each of the sub-bands, the second embodiment of the present invention proposes a method for dividing an entire time-frequency band of the OFDM communication system into a plurality of sub-bands and generating a pilot pattern set by independently generating a pilot pattern at each of the sub-blocks.

An entire frequency band of the OFDM communication system is divided into a plurality of sub-frequency bands corresponding to sub-carriers. In the second embodiment of the present invention, the plurality of sub-frequency bands are generated into a predetermined number of groups, and the sub-frequency bands included in each of the groups are defined as a "sub-band." The term "sub-band" used herein has the same as the sub-band defined in the first embodiment of the present invention.

In addition, a transmission time period of the OFDM communication system can be divided into a plurality of time periods having a predetermined size, and each of the time periods will be defined as a "sub-time period."

Herein, a block on a time-frequency domain, which is represented by one sub-band and one sub-time period, is defined as a "sub-block." Therefore, the second embodiment of the present invention maximizes the riumber of base stations that can be identified, by generating a pilot pattern on a sub-block basis and distinguishing the pilot pattern on a sub-block basis.

Additionally, in FIG. 8, a horizontal axis represents a time axis, and a vertical axis represents a frequency axis. That is, a time-frequency domain of the OFDM communication system is divided on a sub-block basis.

Referring to FIG. 8, an entire frequency band is divided into b sub-bands of a first sub-band 811 to a b$^{th}$ sub-band 817. For example, in FIG. 8, each of sub-bands is generated with 8 sub-carriers. A frequency band having 32 sub-carriers can be divided into 4 (32/8=4) sub-bands. Although sub-bands and sub-time periods are equal in size in FIG. 8, the sub-bands and the sub-time periods can be different in size. For example, the size of the sub-bands can be set such that the first sub-band 811 has a size of 5 and a second sub-block 813 has a size of 10, or the first sub-band 811 has a size of 4 and the second sub-block 813 has a size of 7. That is, the sub-blocks can be implemented such that they have different sizes. However, in the second embodiment of the present invention, it is assumed that the sub-blocks have the same size, for the convenience of explanation.

In the time-frequency domain, an entire time period can be divided into a plurality of sub-time periods 819, 821, 823, and 825. For example, in FIG. 8, 8 symbol transmission periods constitute one sub-time period. That is, each time 8 symbols arc transmitted from a base station to a mobile station, one sub-time period elapses. A pilot pattern set is assigned by assigning pilot patterns on a sub-block (800) basis as described above, thereby making it possible to identify a plurality of base stations. Here, a length in a time domain of the sub-block is defined as a sub-block length 802, and a bandwidth in a frequency domain of the sub-block is defined as a sub-block bandwidth 801. That is, in FIG. 8, a sub-block length and a sub-block bandwidth are both 8.

A length and a bandwidth of the sub-block should be set considering a coherence bandwidth and a coherence time. That is, if a length and a bandwidth of the sub-block fail to satisfy the coherence time and the coherence bandwidth, a misoperation occurs in distinguishing pilot patterns as described above. In FIG. 8, a pilot pattern set comprises 8 different pilot patterns of $S_0$ to $S_7$.

Basically, the independent pilot patterns $S_0$ to $S_7$ are generated on a sub-block (800) basis. The sub-block 800, as described above, is represented by the sub-block length 802 in the time domain, and can be set to a multiple of a basic data transmission unit. In addition, the sub-block 800 is represented by the sub-block bandwidth 801 in the frequency domain, and occupies one of b sub-bands into which an entire frequency band of the OFDM communication system is divided. A plurality of the sub-blocks constitute one pilot block. Here, the pilot block is comprised of a plurality of sub-blocks each generating an independent pilot pattern. A set of pilot patterns generated at the sub-blocks constituting the pilot block is generated as a pilot pattern set.

A length of the pilot block is equal to a value determined by summing lengths of a predetermined number of sub-blocks. A bandwidth of the pilot block is equal to an entire bandwidth of the OFDM communication system. That is, one pilot block is comprised of a plurality of sub-time periods and a plurality of sub-bands. For example, it is assumed in FIG. 8 that one pilot block is comprised of 2 sub-time periods and b sub-bands. That is, it is assumed that one pilot block is combined from 2xb pilot sub-blocks. In FIG. 8, 2 pilot blocks each comprised of 2×b pilot sub-blocks are illustrated.

A pilot pattern set, i.e., pilot pattems generated on a pilot block basis, is repeatedly generated at periods of the pilot block length. That is, in FIG. 8, because a length of the pilot block is equal to 2 sub-time periods, a pilot block having the same pilot pattern set is repeated for every 2 sub-time periods.

The pilot pattern set for identifying base stations can be expressed as a pilot pattern set matrix $P_t$ defined as in Equation (6).

$$P_t = \begin{bmatrix} S_0 & S_4 & \cdots \\ S_1 & S_2 & \cdots \\ S_3 & S_7 & \cdots \\ & \cdots & \\ S_5 & S_6 & \cdots \end{bmatrix} \qquad \cdots\cdots\cdots\cdots (6)$$

As illustrated in Equation (6), the pilot pattern set generated in a pilot block is expressed in the form of a matrix. That is, pilot patterns of $S_0$, $S_1$, $S_3$, $\cdots$, $S_5$ are transmitted for respective sub-bands in a first sub-time period, and pilot patterns of $S_4$, $S_2$, $S_7$, $\cdots$, $S_6$ are transmitted for respective sub-bands in the next sub-time period.

In FIG. 8, in the first sub-time period 819, a pilot pattern $S_0$ is transmitted for the first sub-band 811, a pilot

pattern $S_1$ is transmitted for the second sub-band 813, a pilot pattern $S_3$ is transmitted for the third sub-band 815, and in this manner, a pilot pattern $S_5$ is transmitted for the $b^{th}$ sub-band 817, the last sub-band.

Similarly, in the second sub-time period 821, a pilot pattern $S_4$ is transmitted for the first sub-band 811, a pilot pattern $S_2$ is transmitted for the second sub-band 813, a pilot pattern $S_7$ is transmitted for the third sub-band 815, and in this manner, a pilot pattern $S_6$ is transmitted for the $b^{th}$ sub-band 817, the last sub-band. As described above, the pilot patterns $S_0$ to $S_7$ are generated based on a slope of the pilot channel signals and a transmission start point of the pilot channel signals.

In FIG. 8, because one pilot block is comprised of two sub-time blocks, or the sum of 2×b sub-blocks, the same pilot pattern set is repeated for every two sub-time periods. That is, a pilot pattern set including pilot patterns of the first sub-time period 819 and the second sub-time period 821 is equal to a pilot pattern set including pilot patterns of the third sub-time period 823 and the fourth sub-time period 825. When the pilot blocks are different in pilot pattern set, it means that corresponding base stations are different from each other. However, when a mobile station continuously exchanges data with the same base station, the pilot pattern set is repeated on a pilot block basis.

That is, because the pilot pattern set for identification of a base station is generated on a pilot block basis, the mobile station can receive a same or different pilot pattern set on a pilot block basis. In FIG. 8, a mobile station exchanges data with only one base station and the same pilot pattern set is repeated on a pilot block basis.

The pilot block, as described above, generates different pilot patterns for each sub-block comprised of a plurality of sub-time periods and a plurality of sub-bands. That is, one sub-block can generate as many pilot patterns as $S_{no\_max}$ given in Equation (3), considering the coherence bandwidth and the coherence time.

The number of possible pilot pattern sets according to the second embodiment of the present invention can be represented by Equation (7).

$$\text{number of pilot pattern sets} = S_{max}^{bxl} \tag{7}$$

In Equation (7), $S_{max}$ denotes the maximum number of possible slopes of a plot pattern, and is identical to $S_{no\_max}$ of Equation (3). The $S_{max}$ represents the number of pilot patterns capable of distinguishing a plurality of sub-blocks constituting one pilot block: Further, in Equation (7), $l$ denotes the number of sub-time periods constituting one pilot block in a time domain. For example, if it is assumed that the maximum number $S_{max}$ of plot patterns that can be generated in one sub-block is 4 ($S_{max}$=4) and one pilot block is comprised of 3 sub-bands and is comprised of two sub-time periods in a time domain, then the number of possible pilot pattern sets becomes $4^{3\times2}$=4096 in accordance with Equation (7).

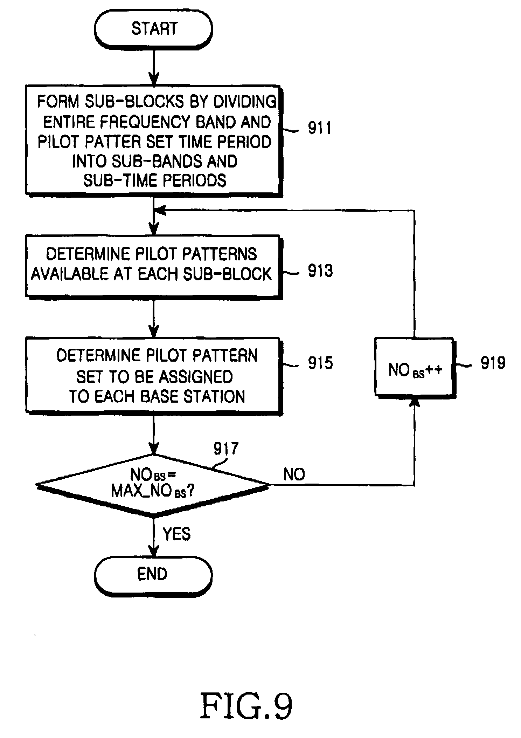

FIG. 9 is a flowchart illustrating a procedure for assigning a pilot pattern set according to the second embodiment of the present invention. However, before a description of FIG. 9 is given, it should be noted that a controller (not shown) for an upper layer of an OFDM communication system assigns a pilot pattern set to each of base station constituting the OFDM communication system in order to perform the procedure of FIG. 9. Further, the controller notifies each base station of information on a pilot pattern set assigned thereto, and also notifies each mobile station of the same information. Then each base station transmits a pilot signal for base station identification according to the pilot pattern set assigned thereto, and a mobile station determines to which base station it belongs, using a pilot pattern set of the received pilot signal.

Referring to FIG. 9, in step 911, the controller divides an entire frequency band of the OFDM communication system into a plurality of sub-bands, and divides the pilot pattern set time period into a plurality of sub-time periods to form a plurality of sub-blocks. Here, the number of sub-bands and sub-time periods into which the entire frequency band of the OFDM communication system and the pilot pattern set time period are divided can be variably determined according to a characteristic of the OFDM communication system.

In step 913, the controller determines pilot patterns available at each of the formed sub-blocks, Here, the pilot patterns available at each of the sub-blocks are determined considering a coherence bandwidth and a coherence time, as described above. In step 915, the controller determines a pilot pattern set to be assigned to each of base stations included in the OFDM communication system.

In step 917, the controller determines whether the number $NO_{BS}$ of the currently determined pilot pattern sets is identical to the total number $MAX\_NO_{BS}$ of base stations constituting the OFDM communication system. If it is determined that the number $NO_{BS}$ of the currently determined pilot pattern sets is not identical to the total number $MAX\_NO_{BS}$ of base stations constituting the OFDM communication system, in step 919, the controller increases the number $NO_{BS}$ of the currently determined pilot pattern sets by 1 ($BO_{BS}$++), and then returns to step 913.

However, if it is determined in step 917 that the number $NO_{BS}$ of the currently determined pilot pattern sets is identical to the total number $MAX\_NO_{BS}$ of base stations constituting the OFDM communication system, the controller ends the ongoing procedure.

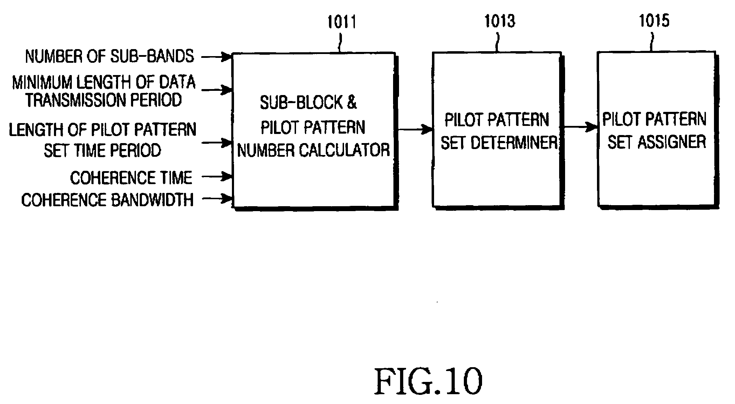

FIG. 10 is a block diagram illustrating an internal structure of an apparatus for assigning a pilot pattern set according to the second embodiment of the present invention. Referring to FIG. 10, the pilot pattern set assigning apparatus includes a sub-block & pilot pattern number calculator 1011, a pilot pattern set determiner 1013, and a pilot pattern set assigner 1015.

The sub-block & pilot pattern number calculator 1011 receives information on the number 'b' of sub-bands to be distinguished in the OFDM communication system, a minimum data transmission/reception period length, a pilot pattern set time period length $l$, a coherence time, and a coherence bandwidth, and calculates the number of pilot patterns available at each of the $b \times l$ sub-blocks considering the received information on the number 'b' of sub-bands, the minimum data transmission/reception period length, the pilot pattern set time period length $l$, the coherence time, and the coherence bandwidth. For example, if it is assumed that the number of pilot patterns available at each of the sub-bands is $S_{max}$, then pilot patterns having slopes $[S_1, \cdots, S_{max}]$ of $S_1$ to $S_{max}$ can be generated at each of the sub-bands.

The sub-block & pilot pattern number calculator 1011 outputs information on the number $S_{max}$ of the pilot patterns available at each of the $b \times l$ sub-blocks to the pilot pattern set determiner 1013. The pilot pattern set determiner 1013 receives the information on the number $S_{max}$ of the pilot patterns available at each of the $b \times l$ sub-blocks and determines a pilot pattern set by selecting one of the pilot patterns available at each of the $b \times l$ sub-blocks.

Here, the number of the pilot pattern sets is determined based on the number of pilot patterns available at each of the sub-blocks and the number of sub-blocks constituting one pilot block, as described in connection with Equation (7).

The pilot pattern set determiner 1013 outputs the determined pilot pattern sets to the pilot pattern set assigner 1015. The pilot pattern set assigner 1015 receives the pilot pattern sets output from the pilot pattern set determiner 1013, and assigns the pilot pattern sets to each of base stations constituting the OFDM communication system.

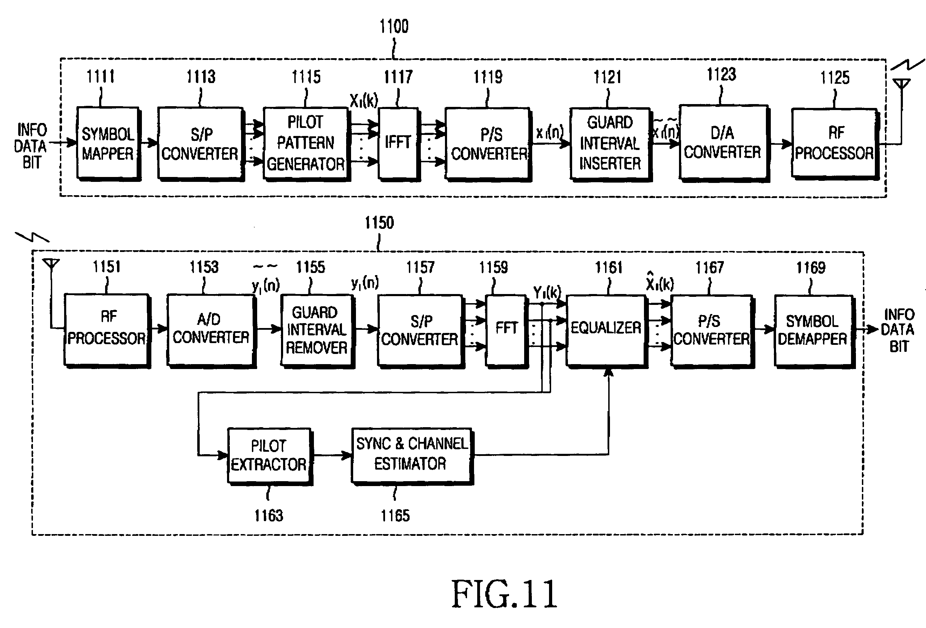

FIG. 11 is a block diagram schematically illustrating an OFDM communication system for implementing embodiments of the present invention. Referring to FIG. 11, the OFDM communication system comprises a transmission apparatus, or a base station apparatus 1100, and a reception apparatus, or a mobile station apparatus 1150.

The base station apparatus 1100 comprises a symbol mapper 1111, a serial-to-parallel (S/P) converter 1113, a pilot pattern generator 1115, an inverse fast Fourier transform (IFFT) block 1117, a parallel-to-serial (P/S) converter 1119, a guard interval inserter 1121, a digital-to-analog (D/A) converter 1123, and a radio frequency (RF) processor 1125. When there arc information data bits to be transmitted, the information data bits are input to the symbol mapper 1111. The symbol mapper 1111 symbol-maps (or modulates) the received information data bits using a predetermined modulation scheme, and outputs the symbol-mapped information data bits to the serial-to-parallel converter 1113. Here, quadrature phase shift keying (QPSK) or 16-ary quadrature amplitude modulation (16QAM) can be used as the modulation scheme. The serial-to-parallel converter 1113 parallel-converts modulated serial symbols output from the symbol mapper 1111, and outputs the parallel-converted modulated symbols to the pilot pattern generator 1115. The pilot pattern generator 1115 receives the parallel-converted modulated symbols, generates pilot patterns according to a pilot pattern set assigned to the base station itself in the manner described above, inserts the generated pilot patterns into the parallel-converted modulated symbols, and outputs the resultant symbols to the IFFT block 1117. Herein, a signal output from the pilot pattern generator 1115, i.e., a parallel signal including the modulated symbols and pilot symbols corresponding to pilot patterns, will be referred to as $X_l(k)$. An operation of generating pilot patterns according to the pilot pattern set is identical to the operation described in connection with the first and the second embodiments of the present invention. Therefore, a detailed description thereof will not be repeated.

The IFFT block 1117 performs N-point IFFT on the signal $X_l(k)$ output from the pilot pattern generator 1115, and outputs the resultant signal to the parallel-to-serial converter 1119. The parallel-to-serial converter 1119 serial-converts the signal, and outputs the serial-converted signal to the guard interval inserter 1121. Here, the signal output from the parallel-to-serial converter 1119 will be called $x_l(n)$. The guard interval inserter 1121 inserts a guard interval signal into the signal output from the parallel-to-serial converter 1119, and outputs the resultant signal to the digital-to-analog converter 1123. Here, the guard interval is inserted in order to remove interference between a previous OFDM symbol transmitted at a previous OFDM symbol time and a current OFDM symbol to be transmitted at a current OFDM symbol time in the OFDM communication system. In addition, the guard interval is used in a Cyclic Prefix method for copying last particular samples of an OFDM symbol in a time domain and inserting the copied samples in a valid OFDM symbol, or a Cyclic Postfix method for copying first particular sample of an OFDM symbol in a frequency domain and inserting the copied samples in a valid OFDM symbol. Further, a signal output from the guard interval inserter 1121 will be referred to as $\tilde{x}_l(n)$. The signal $\tilde{x}_l(n)$ output from the guard interval inserter 1121 becomes one OFDM symbol.

The digital-to-analog converter 1123 analog-converts the signal output from the guard interval inserter 1121, and outputs the resultant signal to the RF processor 1125. Here, the RF processor 1125 includes a filter and a front-end unit. The RF processor 1125 RF-processes the signal output from the digital-to-analog converter 1123 so that it can be transmitted over the air, and transmits the RF-processed signal over the air via an antenna.

The mobile station apparatus 1150 comprises an RF processor 1151, an analog-to-digital (A/D) converter 1153, a guard interval remover 1155, a serial-to-parallel (S/P) converter 1157, a fast Fourier transform (FFT) block 1159, an equalizer 1161, a pilot extractor 1163, a synchronization & channel estimator 1165, a parallcl-to-scrial (P/S) converter 1167, and a symbol demapper 1169. A signal transmitted from the base station apparatus 1100 experiences a multipath channel and includes a noise component $\widetilde{w}_l(\widetilde{n})$ added thereto, before it is received via an antenna of the mobile station apparatus 1150. The signal received via the antenna is input to the RF processor 1151, which down-coverts the signal received via the antenna into an intermediate frequency (IF) signal, and outputs the IF signal to the analog-to-digital converter 1153. The analog-to-digital converter 1153 digital-converts an analog signal output from the RF processor 1151, and outputs the resultant signal to the guard interval remover 1155 and the pilot extractor 1163. Here, the digital signal output from the analog-to-digital converter 1153 will be referred to as $\widetilde{y}_l(\widetilde{n})$ .

The guard interval remover 1155 removes a guard interval from the signal $\widetilde{y}_l(\widetilde{n})$ , and outputs the resultant signal to the serial-to-parallel converter 1157. Here, the signal output from the guard interval remover 1155 will be called $y_l(n)$.

The serial-to-parallel converter 1157 parallel-converts the serial signal $y_l(n)$ output from the guard interval remover 1155, and outputs the resultant signal to the FFT block 1159. The FFT block 1159 performs N-point FFT on the signal output from the serial-to-parallel converter 1157, and outputs the resultant signal to the equalizer 1161 and the pilot extractor 1163. Here, the signal output from the FFT block 1159 will be called $Y_l(k)$.

The equalizer 1161 performs channel equalization on the signal $Y_l(k)$ output from the FFT block 1159, and outputs a resultant signal to the parallel-to-serial converter 1167. Here, the signal output from the equalizer 1161 will be called $\hat{X}_l(k)$.. The parallel-to-serial converter 1167 serial-converts the parallel signal $\hat{X}_l(k)$ output from the equalizer 1161, and outputs a resultant signal to the symbol demapper 1169. The symbol demapper 1169 demodulates the signal output from the parallel-to-serial converter 1167 using a demodulation scheme corresponding to the modulation scheme used in the base station apparatus 1100, and outputs a resultant signal as received information data bits.

Further, the signal $Y_l(k)$ output from the FFT block 1159 is input to the pilot extractor 1163, and the pilot extractor 1163 extracts pilot symbols from the signal $Y_l(k)$ output from the FFT block 1159, and outputs the extracted pilot symbols to the synchronization & channel estimator 1165. The synchronization & channel estimator 1165 synchronizes and channel estimates the pilot symbols output from the pilot extractor 1163, and outputs the result to the equalizer 1161. The synchronization & channel estimator 1165, as described above, which includes pilot pattern sets for respective base stations constituting the OFDM communication system in the form of a table, determines to which pilot pattern set among the pilot pattern sets the pilot patterns output from the pilot extractor 1163 matched, and estimates a base station corresponding to the matched pilot pattern set as a base station to which the mobile station apparatus 1150 itself belongs. Further, the synchronization & channel estimator 1165 analyzes all pilot pattern sets of the OFDM communication system in the same manner.

As is understood from the description above, an entire frequency band of an OFDM communication system is divided into a plurality of sub-bands, pilot patterns are generated considering a coherence bandwidth and a coherence time for each of the sub-bands, and pilot pattern sets are generated by combining the pilot patterns generated for each sub-band. Base stations included in the OFDM communication system arc identified with the pilot pattern sets, thereby increasing the number of base stations that can be identified.

In addition, a time-frequency band of the OFDM communication system is divided into a plurality of sub-bands and sub-time periods to form sub-blocks, and pilot patterns arc combined for each of the sub-blocks to identify base stations constituting the OFDM communication system, increasing the number of base stations that can be identified. In conclusion, the limited radio resources, i.e., the limited pilot pattern resources, are grouped for efficient utilization, thereby contributing to improvement in entire system performance.

While the present invention has been shown and described with reference to certain preferred embodiments thereof, it will be understood by those skilled in the art that various changes in form and details may be made therein without departing from the spirit and scope of the present invention as defined by the appended claims.

**Claims**

1. A method for generating base station identification patterns for individually identifying base stations within cells to which mobile stations belong, in a radio communication system transmitting reference signals for identifying a plurality of base stations, from the base stations to the mobile stations, the method comprising the steps of:

   dividing a frequency domain into a plurality of sub-bands in a frequency-time domain given with a frequency domain and a time domain; and
   determining reference signal patterns at each of the plurality of sub-bands.

2. The method of claim 1, wherein the frequency domain is divided into the plurality of sub-bands, such that each of the plurality of sub-bands has at least one of predetermined frequency domains.

3. The method of claim 2, wherein each of the predetermined frequency domains corresponds to a maximum frequency domain in which a radio channel environment is constant.

4. The method of claim 1, wherein the reference signal patterns are determined considering a predetermined time domain corresponds to a maximum time domain where a radio channel environment is constant.

5. The method of claim 1, wherein each of the reference signal patterns is a slope of reference signals transmitted in the predetermined time domain within each of the plurality of sub-bands.

6. An apparatus for generating base station identification patterns for individually identifying base stations within cells to which mobile stations belong, in a radio communication system transmitting reference signals for identifying a plurality of base stations, from the base stations to the mobile stations, the apparatus comprising:

   a sub-band and reference signal pattern number calculator for dividing a frequency region into a plurality of sub-bands in a frequency-time domain given with a frequency domain and a time domain, and calculating reference signal patterns at each of the plurality of sub-bands; and
   a base station identification pattern determiner for selecting a predetermined number of reference signal patterns among the calculated reference signal patterns at each of the plurality of sub-bands and combining the selected reference signal patterns, thereby generating base station identification patterns for identification of the base stations.

7. The apparatus of claim 6, wherein the frequency band is divided into the plurality of the sub-bands, such that each of the plurality of sub-bands has at least one of predetermined frequency domains.

8. The apparatus of claim 7, wherein each of the predetermined frequency domains corresponds to a maximum frequency domain in which a radio channel environment is constant.

9. The apparatus of claim 6, wherein the reference signal patterns arc calculated considering a predetermined time domain corresponds to a maximum time domain where it can be assumed that a radio channel environment is constant.

10. The apparatus of claim 6, wherein each of the reference signal patterns is a slope of reference signals transmitted in the predetermined time domain within each of the plurality of sub-bands.

11. The apparatus of claim 6, wherein each of the base station identification patterns is a set of slopes represented by the selected reference signal patterns.

12. A method for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals are transmitted, the method comprising the steps of:

   dividing the entire frequency band into a predetermined number of sub-bands;
   calculating possible reference signal patterns at each of the sub-bands, considering a predetermined time domain and a predetermined frequency domain;
   selecting a predetermined number of reference signal patterns among the calculated reference signal patterns at each of the sub-bands; and
   combining the selected reference signal patterns selected at each of the sub-bands, thereby generating base station identification patterns for identification of the base station.

13. The method of claim 12, wherein each of the reference signal patterns is a slope of reference signals transmitted at the sub-frequency bands within the sub-band.

14. The method of claim 12, wherein each of the base station identification patterns is a set of slopes represented by the selected reference signal patterns.

**15.** The method of claim 12, wherein the predetermined time domain is a maximum time domain in which a radio channel environment is constant, and the predetermined frequency domain is a maximum frequency domain in which the radio channel environment is constant.

**16.** An apparatus for generating base station identification patterns for individually identifying base stations included a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals arc transmitted, the apparatus comprising:

a sub-band and reference signal pattern number calculator for dividing the entire frequency band into a predetermined number of sub-bands, and calculating possible reference signal patterns at each of the sub-bands, considering a predetermined time domain and a predetermined frequency domain; and
a base station identification pattern determiner for selecting a predetermined number of reference signal patterns among the calculated reference signal patterns at each of the sub-bands and combining the selected reference signal patterns, thereby generating base station identification patterns for identification of the base station.

**17.** The apparatus of claim 16, further comprising a base station identification pattern assigner for assigning the determined base station identification patterns to their corresponding base stations.

**18.** The apparatus of claim 16, wherein each of the reference signal patterns is a slope of reference signals transmitted at the sub-frequency bands within each of the sub-bands.

**19.** The apparatus of claim 16, wherein each of the base station identification patterns is a set of slopes represented by the selected reference signal patterns.

**20.** The apparatus of claim 16, wherein the predetermined time domain is a maximum time domain in which a radio channel environment is constant, and the predetermined frequency domain is a maximum frequency domain in which the radio channel environment is constant.

**21.** A method for generating base station identification patterns for individually identifying base stations within cells to which mobile stations belong, in a radio communication system transmitting reference signals for identifying the base stations, from the base stations to the mobile stations, the method comprising the steps of:

forming a plurality of sub-blocks by dividing a frequency domain into a plurality of sub-bands, and dividing a time domain into a plurality of sub-time periods in a frequency-time domain given with the frequency domain and the time domain; and
determining reference signal patterns at each of the sub-blocks.

**22.** The method of claim 21, wherein the frequency domain is divided into a plurality of the sub-bands, such that each of the plurality of the sub-bands has at least one of predetermined frequency domains.

**23.** The method of claim 22, wherein each of the predetermined frequency domains corresponds to a maximum frequency domain in which a radio channel environment is constant.

**24.** The method of claim 21, wherein the time domain is divided into a plurality of the sub-time periods, such that each of the plurality of the sub-time periods has at least one of predetermined time domains.

**25.** The method of claim 24, wherein each of the predetermined time domains corresponds to a maximum time domain in which a radio channel environment is constant.

**26.** The method of claim 21, wherein the reference signal patterns are determined considering the predetermined time domain corresponds to a maximum time domain where a radio channel environment is constant.

**27.** The method of claim 21, wherein each of the reference signal patterns is a slope of reference signals transmitted at the predetermined time domain and the predetermined frequency domain within the sub-blocks.

**28.** An apparatus for generating base station identification patterns for identifying base stations within cells to which mobile stations belong, in a radio communication system transmitting reference signals for identifying the base stations, from the base stations to the mobile stations, the apparatus comprising:

a sub-block and reference signal pattern number calculator for

forming a plurality of sub-blocks by dividing a frequency domain into a plurality of sub-bands, and dividing a time domain into a plurality of sub-time periods in a frequency-time domain given with the frequency domain and the time domain, and
calculating reference signal patterns at each of the sub-blocks;

and
a base station identification pattern determiner for selecting a predetermined number of reference signal patterns among the calculated reference signal patterns at each of the sub-bands, and combining the selected reference signal patterns, thereby generating base station identification patterns for identification of the base station.

**29.** The apparatus of claim 28, wherein the frequency domain is divided into a plurality of the sub-bands, such that each of the plurality of the sub-bands has at least one of predetermined frequency domains.

**30.** The apparatus of claim 29, wherein each of the predetermined frequency domains corresponds to a maximum frequency domain in which a radio channel environment is constant.

**31.** The apparatus of claim 28, wherein the time domain is divided into a plurality of the sub-time periods, such that each of the plurality of the sub-time periods has at least one of predetermined time domains.

**32.** The apparatus of claim 31, wherein each of the predetermined time domains corresponds to a maximum time domain in which a radio channel environment is constant.

**33.** The apparatus of claim 28, wherein each of the reference signal patterns is a slope of reference signals transmitted at the predetermined time domain and the predetermined frequency domain within the sub-blocks.

**34.** A method for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands in which the reference signals are transmitted, the method comprising the steps of:

forming a plurality of sub-blocks by dividing the entire frequency band into a predetermined number of sub-bands and dividing a time domain into a predetermined number of sub-time periods;
calculating possible reference signal patterns at each of the sub-blocks considering a predetermined time domain and a predetermined frequency domain;
selecting a predetermined number of reference signal patterns among the calculated reference signal patterns at each of the sub-blocks: and
combining the selected reference signal patterns, thereby determining base station identification patterns of the base stations.

**35.** The method of claim 34, wherein each of the reference signal patterns is a slope of reference signals transmitted at the sub-frequency bands within each of the sub-blocks.

**36.** The method of claim 34, wherein each of the base station identification patterns is a set of slopes represented by the selected reference signal patterns

**37.** The method of claim 34, wherein the predetermined time domain is a maximum time domain in which a radio channel environment is constant, and the predetermined frequency domain is a maximum frequency domain in which the radio channel environment is constant.

**38.** An apparatus for generating base station identification patterns for individually identifying base stations included in a radio communication system, in the radio communication system for dividing an entire frequency band into a plurality of sub-frequency bands, transmitting reference signals at the sub-frequency bands, and transmitting data signals at the sub-frequency bands, excluding the sub-frequency bands at which the reference signals are transmitted, the apparatus comprising:

a sub-block and reference signal pattern number calculator for forming a plurality of sub-blocks by dividing the entire frequency band into a predetermined number of sub-bands and dividing a time domain into a predetermined number of sub-time periods, and calculating possible reference signal patterns at each of the sub-blocks, considering a predetermined time domain and a predetermined frequency domain; and

a base station identification pattern determiner for selecting a predetermined number of reference signal patterns among the calculated reference signal patterns at each of the sub-blocks and combining the selected reference signal patterns, thereby generating base station identification patterns for identification of the base stations.

39. The apparatus of claim 38, further comprising a base station identification pattern assigner for assigning the determined base station identification patterns to their corresponding base stations.

40. The apparatus of claim 38, wherein each of the reference signal patterns is a slope of reference signals transmitted at the sub-frequency bands within each of the sub-blocks.

41. The apparatus of claim 38, wherein each of the base station identification patterns is a set of slopes represented by the selected reference signal patterns.

42. The apparatus of claim 38, wherein the predetermined time domain is a maximum time domain in which a radio channel environment is constant, and the predetermined frequency domain is a maximum frequency domain in which the radio channel environment is constant.

43. An apparatus for transmitting, by a base station, a base station identification pattern for identifying the base station in a radio communication system that divides an entire frequency band into a plurality of sub-frequeney bands, transmits reference signals at least one of the sub-frequency bands, and transmits data signals at the sub-frequency bands, excluding the at least one of at which the sub-frequency bands at which the reference signals are transmitted, the apparatus comprising:

a base station identification pattern generator for receiving parallel-converted data signals, generating reference signals corresponding the base station identification pattern, and inserting the reference signals into the parallel-converted data signals;

a inverse fast Fourier transform (IFFT) block for IFFT-converting signals output from the base station identification pattern generator; and

a transmitter for serial-converting the IFFT-converted parallel signals, inserting a predetermined guard interval signal into the serial-converted signal, and transmitting the guard interval-inserted signal.

44. The apparatus of claim 43, wherein the transmitter comprises:

a parallel-to-serial converter for serial-converting the IFFT-converted parallel signals;

a guard interval inserter for inserting the guard interval signal into a serial signal output from the parallel-to-serial converter; and

a radio frequency (RF) processor for RF-processing a signal output from the guard interval inserter.

45. The apparatus of claim 43, wherein the base station identification pattern is generated by dividing the entire frequency band into a predetermined number of sub-bands, selecting a predetermined number of reference signal patterns among possible reference signals at each of the sub-bands, considering a predetermined time and a predetermined bandwidth, and combining the reference selected signal patterns.

46. The apparatus of claim 45, wherein each of the reference signal patterns is a slope of reference signals transmitted at the sub-frequency bands within each of the sub-bands.

47. The apparatus of claim 43, wherein the base station identification pattern is generated by dividing the entire frequency band into a predetermined number of sub-bands and dividing a base station identification pattern time period to which the base station identification pattern is applied into a predetermined number of sub-time periods, to thereby form a plurality of sub-blocks, selecting a predetermined number of reference signal patterns among possible reference signal patterns at each of the sub-blocks considering a predetermined time and a predetermined bandwidth, and combining the selected reference signal patterns.

48. The apparatus of claim 47, wherein each of the reference signal patterns is a slope of reference signals transmitted at the sub-frequency bands within each of the sub-blocks.

49. The apparatus of claim 45, wherein the base station identification pattern is a set of slopes represented by the selected reference signal patterns.

50. The apparatus of claim 47, wherein the base station identification pattern is a set of slopes represented by the selected reference signal patterns.

51. The apparatus of claim 45, wherein the predetermined time is a time at which a radio channel environment is constant, and the predetermined bandwidth is a bandwidth at which the radio channel environment is constant.

52. The apparatus of claim 47, wherein the predetermined time is a time at which a radio channel environment is constant, and the predetermined bandwidth is a bandwidth at which the radio channel environment is constant.

53. A method for transmitting, by a base station, a base station identification pattern for identifying the base station in a radio communication system that divides an entire frequency band into a plurality of sub-frequency bands, transmits reference signals at at least one of the sub-frequency bands, and transmits data signals at the sub-frequency bands, excluding the sub-frequency bands at which the reference signals are transmitted, the method comprising the steps of:

receiving parallel-converted data signals;
generating reference signals corresponding the base station identification pattern for identifying a base station,;
inserting the reference signals into the parallel-converted data signals;
IFFT (Inverse Fast Fourier Transform)-converting the parallel-converted data signals into which the reference signals are inserted;
serial-converting the IFFT-converted parallel signals;
inserting a predetermined guard interval signal into the serial-converted signals; and
transmitting the guard interval-inserted signals.

54. The method of claim 53, wherein the base station identification pattern is generated by dividing the entire frequency band into a predetermined number of sub-bands, selecting a predetermined number of reference signal patterns among possible reference signals at each of the sub-bands, considering a predetermined time and a predetermined bandwidth, and combining the selected reference signal patterns.

55. The method of claim 54, wherein the reference signal pattern is a slope of reference signals transmitted at the sub-frequency bands within each of the sub-bands.

56. The method of claim 53, wherein the base station identification pattern is generated by dividing the entire frequency band into a predetermined number of sub-bands and dividing a base station identification pattern time period to which the base station identification pattern is applied into a predetermined number of sub-time periods, to thereby form a plurality of sub-blocks, selecting a predetermined number of reference signal patterns among possible reference signal patterns at each of the sub-blocks, considering a predetermined time and a predetermined bandwidth, and combining the selected reference signal patterns.

57. The method of claim 56, wherein the reference signal pattern is a slope of reference signals transmitted at the sub-frequency bands within each of the sub-blocks.

58. The method of claim 54, wherein the base station identification pattern is a set of slopes represented by the selected reference signal patterns.

59. The method of claim 56, wherein the base station identification pattern is a set of slopes represented by the selected reference signal patterns.

60. The method of claim 54, wherein the predetermined time is a time at which a radio channel environment is constant, and the predetermined bandwidth is a bandwidth at which the radio channel environment is constant.

61. The method of claim 56, wherein the predetermined time is a time at which a radio channel environment is constant, and the predetermined bandwidth is a bandwidth at which the radio channel environment is constant.

62. An apparatus for receiving, by a mobile station, a base station identification pattern for identifying a base station in a radio communication system that divides an entire frequency band into a plurality of sub-frequency bands, transmits reference signals at least one of the sub-frequency bands, and transmits data signals at the sub-frequency bands, excluding the sub-frequency bands at which the reference signals arc transmitted, the apparatus comprising:

a receiver for removing a guard interval signal from a received signal at a predetermined period, and parallel-converting the guard interval-removed signal;
a fast Fourier transform (FFT) block for FFT-converting a signal output from the receiver;
a reference signal extractor for extracting reference signals from the FFT-converted signals; and
a synchronization and channel estimator for detecting a base station identification pattern from the reference signals extracted from the reference signal extractor, and identifying the base station to which the mobile station belongs.

63. The apparatus of claim 62, wherein the receiver comprises:

a guard interval remover for removing the guard interval signal from the received signal; and
a serial-to-parallel converter for parallel-converting the guard interval-removed serial signal.

64. The apparatus of claim 62, wherein the base station identification pattern is generated by dividing the entire frequency band into a predetermined number of sub-bands, selecting a predetermined number of reference signal patterns among possible reference signals at each of the sub-bands, considering a predetermined time and a predetermined bandwidth, and combining the selected reference signal patterns.

65. The apparatus of claim 64, wherein the reference signal pattern is a slope of reference signals transmitted at the sub-frequency bands within each of the sub-bands.

66. The apparatus of claim 62, wherein the base station identification pattern is generated by dividing the entire frequency band into a predetermined number of sub-bands and dividing a base station identification pattern time period to which the base station identification pattern is applied into a predetermined number of sub-time periods, to thereby form a plurality of sub-blocks, selecting a predetermined number of reference signal patterns among possible reference signal patterns at each of the sub-blocks, considering a predetermined time and a predetermined bandwidth, and combining the selected reference signal patterns.

67. The apparatus of claim 66, wherein the reference signal pattern is a slope of reference signals transmitted at the sub-frequency bands within each of the sub-blocks.

68. The apparatus of claim 64, wherein the base station identification pattern is a set of slopes represented by the selected reference signal patterns.

69. The apparatus of claim 66, wherein the base station identification pattern is a set of slopes represented by the selected reference signal patterns.

70. The apparatus of claim 64, wherein the predetermined time is a time at which a radio channel environment is constant, and the predetermined bandwidth is a bandwidth at which the radio channel environment is constant.

71. The apparatus of claim 66, wherein the predetermined time is a time at which a radio channel environment is constant, and the predetermined bandwidth is a bandwidth at which the radio channel environment is constant.

72. A method for receiving, by a mobile station, a base station identification pattern for identifying a base station in a radio communication system that divides an entire frequency band into a plurality of sub-frequency bands, transmits reference signals at least one of the sub-frequency bands, and transmits data signals at the sub-frequency bands, excluding the sub-frequency bands at which the reference signals are transmitted, the method comprising the steps of:

removing a guard interval signal from a received signal at a predetermined period;
parallel-converting the guard interval-removed signal;
FFT (Fast Fourier Transform)-converting the parallel-converted signal;
extracting reference signals from the FFT-converted signals;
detecting a base station identification pattern from the extracted reference signals; and
identifying the base station to which the mobile station belongs.

73. The method of claim 72, wherein the base station identification pattern is generated by dividing the entire frequency band into a predetermined number of sub-bands, selecting a predetermined number of reference signal patterns among possible reference signals at each of the sub-bands by considering a predetermined time and a predetermined bandwidth, and combining the selected reference signal patterns.

74. The method of claim 73, wherein the reference signal pattern is a slope of reference signals transmitted at the sub-frequency bands within each of the sub-bands.

75. The method of claim 72, wherein the base station identification pattern is generated by dividing the entire frequency band into a predetermined number of sub-bands and dividing a base station identification pattern time period to which the base station identification pattern is applied into a predetermined number of sub-time periods, to thereby form a plurality of sub-blocks, selecting a predetermined number of reference signal patterns among possible reference signal patterns at each of the sub-blocks by considering a predetermined time and a predetermined bandwidth, and combining the selected reference signal patterns.

76. The method of claim 75, wherein the reference signal pattern is a slope of reference signals transmitted at the sub-frequency bands within each of the sub-blocks.

77. The method of claim 73, wherein the base station identification pattern is a set of slopes represented by the selected reference signal patterns.

78. The method of claim 75, wherein the base station identification pattern is a set of slopes represented by the selected reference signal patterns.

79. The method of claim 73, wherein the predetermined time is a time at which a radio channel environment is constant, and the predetermined bandwidth is a bandwidth at which the radio channel environment is constant.

80. The method of claim 75, wherein the predetermined time is a time at which a radio channel environment is constant, and the predetermined bandwidth is a bandwidth at which the radio channel environment is constant.

FIG.1

FIG.2

FIG.3

FIG.4

FIG.5A

FIG.5B

FIG.6

EP 1 489 808 A2

NUMBER OF SUB-BANDS →

COHERENCE TIME →

COHERENCE BANDWIDTH →

711

SUB-BAND & PILOT PATTERN NUMBER CALCULATOR

713

PILOT PATTERN SET DETERMINER

715

PILOT PATTERN SET ASSIGNER

FIG.7

FIG.8

START

FORM SUB-BLOCKS BY DIVIDING
ENTIRE FREQUENCY BAND AND
PILOT PATTER SET TIME PERIOD
INTO SUB-BANDS AND
SUB-TIME PERIODS — 911

DETERMINE PILOT PATTERNS
AVAILABLE AT EACH SUB-BLOCK — 913

DETERMINE PILOT PATTERN
SET TO BE ASSIGNED
TO EACH BASE STATION — 915

$NO_{BS}++$ — 919

917

$NO_{BS} = MAX\_NO_{BS}?$

NO

YES

END

# FIG.9

EP 1 489 808 A2

NUMBER OF SUB-BANDS →
MINIMUM LENGTH OF DATA TRANSMISSION PERIOD →
LENGTH OF PILOT PATTERN SET TIME PERIOD →
COHERENCE TIME →
COHERENCE BANDWIDTH →

1011
SUB-BLOCK & PILOT PATTERN NUMBER CALCULATOR →

1013
PILOT PATTERN SET DETERMINER →

1015
PILOT PATTERN SET ASSIGNER

FIG.10

EP 1 489 808 A2

**FIG.11**